# EUROPÄISCHE PATENTSCHRIFT

(11) **EP 2 607 209 B1**
(45) Veröffentlichungstag und Bekanntmachung des Hinweises auf die Patenterteilung: **30.01.2019**
(21) Anmeldenummer: 11405376.2
(22) Anmeldetag: 23.12.2011
(51) Int. Cl.: B62D 11/18, B60K 17/14, B62D 51/00, B62D 51/06, B60K 26/04, B60K 17/10, F16H 61/435

(54) **Selbstfahrende, wenigstens einachsige Arbeitsmaschine zum Betreiben und/oder Fortbewegen von angebauten Arbeitsgeräten oder angehängten Fahrzeugen**
Self-propelled work machine with at least one axle for operating and/or transporting attached work devices or attached vehicles
Machine de travail automobile, à au moins un essieu, pour le fonctionnement et/ou le déplacement d'appareils de travail rapportés ou de véhicules accrochés

(43) Veröffentlichungstag der Anmeldung: 26.06.2013
(73) Patentinhaber: Rapid Technic AG, 8956 Killwangen (CH)
(72) Erfinder: Häfeli, Christian, 6332 Hagendorn (CH)
(74) Vertreter: Fenner, Werner

(56) Entgegenhaltungen:
- EP-A1- 2 491 777
- WO-A1-02/27217
- DE-A1- 2 053 092
- JP-A- 11 059 209
- JP-A- 2004 141 049
- JP-A- 2005 155 846
- JP-A- 2007 032 746
- US-B1- 6 705 840
- US-B1- 7 165 398
- US-B1- 8 011 678

## Beschreibung

Die Erfindung betrifft eine selbstfahrende, wenigstens einachsige Arbeitsmaschine zum Betreiben und/oder Fortbewegen von angebauten Arbeitsgeräten resp. angehängten Fahrzeugen, welche Arbeitsmaschine einevon einem **Antriebsmotor** angetriebene hydrostatische Antriebseinrichtung zur lenkbaren Fortbewegung durch mit den Antriebsrädern einer Fahrachse der Arbeitsmaschine verbundene Hydraulikmotoren eines Antriebsaggregates aufweist, und vorzugsweise in eine Vorwärts- oder eine Rückwärtsfortbewegung verstellbar ist.

Arbeitsmaschinen dieser Art lassen sich bei einachsiger Konstruktion manuell durch eine Bedienungsperson begleitet, mittels seitlichen Lenkholmen führen und steuern, oder bei mehreren Fahrachsen, bei denen die in Vorwärtsrichtung der Arbeitsmaschine angetriebene Fahrachse vorne oder hinten angeordnet ist und sitzend bedienbar sind, mittels Lenkholmen oder Lenkrad führen und betätigen.
Solche Arbeitsmaschinen werden in der Landwirtschaft, dem Landschafts- und Gartenbau, in Kommunalbetrieben und zum Transport von Gütern als auch in der Forstwirtschaft verwendet. Sie eignen sich insbesondere in Fluren und Feldern zum Mähen von Halmgut oder dgl., zur Bodenbearbeitung und zur Räumung von Schnee und Unrat sowie als Zugfahrzeug für Anhänger oder andere fahrbare Arbeitsgeräte. Zum Betrieb der angebauten Arbeitsgeräte wie Mähwerke oder Mähbalken, Heuwerbungs- oder Bodenbearbeitungsmaschinen, Schneefräsen oder-pflüge sowie andere Räumeinrichtungen oder Anhänger, beispielsweise Triebachsanhänger, ist eine ein- und ausschaltbare Zapfwelle vorgesehen, die mit einer Abtriebswelle eines Verbrennungsmotors oder einer dazwischengeschalteten hydrostatischen Antriebseinrichtung verbunden resp. gekuppelt ist, die eine mit Hydraulikmotoren ausgestattete Antriebsräder einer Fahrachse antreibt. Die Antriebseinrichtung ist mit dem Antriebsmotor der Arbeitsmaschine gekuppelt, wozu eine betätigbare mechanische Verbindung, beispielsweise eine elektrische, mechanische oder hydraulische Kupplung vorgesehen ist.
Derartige Einrichtungen dienen einer stufenlosen Geschwindigkeitsregulierung resp. dem Antrieb einer Fahrachse.
Die Fortbewegung der Arbeitsmaschine in gerader Richtung oder nach einer Seite kann durch die Kraft einer Bedienungsperson, durch die Unterstützung einer Einzelradbremse mechanisch, oder mittels hydrostatischer Lenkhilfe, beispielsweise mittels Lenkventil, welches den Antriebsrädern der Arbeitsmaschine zugeordneten Hydraulikmotoren unterschiedliche Ölmengen zur Änderung der Fahrtrichtung zuführt, erfolgen.
Die Arbeitsmaschine kann bei einer Fahrachse durch an einem Lenkholm befestigtes Betätigungsorgan oder bei sitzender Bedienungsperson durch ein an einem Bedienungstableau befestigten Bedienungsorgan vorwärts oder rückwärts bewegt werden.
Weitere diesbezügliche Hinweise sind u.a. der WO 02/102647 A1, EP 2 491 777 A1 (später veröffentlicht) und/oder der CH 696511 A5 zu entnehmen.

Die US 8'011'678 B1 beschreibt ein als Geräteträger ausgebildetes zweiachsiges Fahrzeug, das selbstfahrend ausgebildet ist und eine an der Unterseite des Fahrgestells befestigte Mäheinrichtung aufweist, wobei die Hinterräder hydrostatisch und die Vorderräder mechanisch von einem dazwischen angeordneten Fahrersitz aus lenkbar sind.

**Die** US 6'705'840 B1 **betrifft eine Tandempumpe, mit einem Paar in einem Pumpengehäuse gelagerten und hintereinander ausgerichteten Pumpenwellen koaxial angetriebener Pumpen, die durch ein dazwischenliegendes Winkelgetriebe angetrieben und in selbstfahrenden einachsigen Fahrzeugen einsetzbar sind.**

Es ist Aufgabe der vorliegenden Erfindung, eine einachsige Arbeitsmaschine zu schaffen, deren hydrostatische Antriebseinrichtung durch einfache Konstruktionsmittel, einen übersichtlichen, kontrollierbaren Aufbau ausgebildet ist und ohne Steuerventile für die Lenkung auskommt.

Erfindungsgemäss wird die Aufgabe durch eine Arbeitsmaschine gemäss Anspruch 1 gelöst.

Zur Erfindung gehört sowohl eine hydrostatische Antriebseinrichtung mit einer Antriebseinheit, die die Hydraulikmotoren jedes Antriebsrades der Arbeitsmaschine abhängig verbunden steuert, wie auch eine hydrostatische Antriebseinrichtung, die für jeden Hydraulikmotor einer Fahrachse resp. jedes Antriebsrad einer Fahrachse der Arbeitsmaschine eine eigene Antriebseinheit aufweist, wobei beiden Ausführungsformen eine Steuerung zugeordnet ist.

Erfindungsgemäss ist jedem Hydraulikmotor eines Antriebsrades einer Fahrachse eine Antriebeinheit der Antriebseinrichtung zugeordnet.

Vorteilhaft sind bei den jedem Antriebsrad einer Fahrachse zugeordneten Antriebseinheiten der Antriebseinrichtung die Antriebseinheiten voneinander abhängig oder voneinander unabhängig steuerbar ausgebildet. D.h., dass bei abhängiger Steuerung die eine Antriebseinheit bei gerader Fahrtrichtung etwa die gleiche Flüssigkeitsmenge wie die andere Antriebeinheit an den jeweiligen Hydraulik- oder Fahrmotor liefert, wogegen bei Kurvenfahrt die Steuerung für eine entsprechend grössere Lieferung der Flüssigkeitsmenge an das eine grössere Wegstrecke zurücklegende, äussere Antriebsrad resp. dessen Hydraulikmotor sorgt, während dem das innere Antriebsrad mit einer umgekehrt reziproken Liefermenge versorgt wird.

Bei einer unabhängigen Steuerung der Hydraulikpumpen können bei gerader Fahrtrichtung die Antriebseinheiten resp. deren zugeordnete Hydraulikmotoren einer Fahrachse mit der gleichen Flüssigkeitsmenge, jedoch bei Kurvenfahrt mit unterschiedlicher Flüssigkeitsmenge durch die Steuerung versorgt werden.

Hierzu kann die Hydraulikpumpe einer Antriebseinheit durch einen steuerbaren Motor, vorzugsweise einen Elektromotor resp. einen Verstellmotor ein- und verstellbar ausgebildet sein, der mit einer Steuervorrichtung elektromechanisch verbunden ist, die manuell fernbedienbar ist.

Vorzugsweise ist die Arbeitsmaschine mit einem die angetriebene Fahrachse aufweisenden Fahrgestell ausgebildet, mit dem die hydrostatische Antriebseinrichtung durch eine Befestigungsvorrichtung -wie Gehäuse, Support oder dgl.- verbunden ist, an der zumindest die mit den Hydraulikmotoren antriebswirksam verbundenen Hydraulikpumpen der hydrostatischen Antriebseinrichtung befestigt sind, wodurch eine kompakte Bauweise der Arbeitsmaschine erzielt werden kann.

Zum Zweck der Verstellbarkeit einer Antriebeinheit ist der vorzugsweise als Stellresp. Verstellmotor ausgebildete steuerbare Elektromotor mit einer Stromquelle verbunden, beispielsweise einer Batterie oder einem angetriebenen Alternator.

Es erweist sich als vorteilhaft, wenn die Hydraulikpumpe ein Verstellorgan zur Ein- und Verstellbarkeit der hydraulischen Flüssigkeitsmenge aufweist, das mittel- oder unmittelbar mit dem Elektromotor antriebsverbunden ist.

Hierzu ist vorteilhaft eine mit dem Verstellorgan der Hydraulikpumpe verbundene Einstell- und Verstellvorrichtung mit dem Elektromotor antriebsverbunden.

Zur Änderung der Fördermenge eignen sich Hydraulikpumpen mit unterschiedlichen Verstellorganen und Verstellvorrichtungen.

Die Einstell- und Verstellvorrichtung kann u.a. als Getriebe mit konstanter Untersetzung ausgebildet sein, das ein relativ hohes Untersetzungsverhältnis bietet.

Das Getriebe zur Untersetzung kann form-, reib- oder kraftschlüssig ausgebildet sein, sodass verschiedene Antriebsformen und Antriebsmittel anwendbar sind.

Das Getriebe kann als Zahnrad- oder Zugmittelgetriebe ausgebildet sein, das sich als einfache, unterhaltsfreundliche Konstruktion erweist.

Es eignet sich für eine Einstell- und Verstellvorrichtung ein Stirnradgetriebe, das ein an dem Verstellorgan der Hydraulikpumpe befestigtes Zahnradsegment aufweist, welches in ein an der Welle des Elektromotors befestigtes, einen mehrfach kleineren Teildurchmesser aufweisendes Zahnrad eingreift. Eine 1:1-Antriebverbindung würde eine verschlechterte Ausführungsform der erfindungsgemässen Lösung ergeben, die mehr Raum in Anspruch nimmt und die Einstell- oder Verstellgenauigkeit einer Hydraulikpumpe einschränkt.

Der Einstell- und Verstellzweck kann alternativ durch ein Zugmittelgetriebe erfüllt werden, das ein an dem Verstellorgan der Hydraulikpumpe befestigtes Umlenkrad aufweist, das durch ein angelegtes Zugmittel mit einem an der Welle des Elektromotors befestigten, einen mehrfach kleineren Durchmesser aufweisenden Antriebsrad der Antriebseinheit antriebsverbunden ist. Auch bei dieser Ausführungsform würde eine 1:1-Antriebsverbindung mehr Raum benötigen und die Einstell- oder Verstellgenauigkeit einer Hydraulikpumpe beeinträchtigen.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine räumliche Darstellung einer zum Stand der Technik gehörenden, einachsigen Arbeitsmaschine der **Rapid Technic AG, CH-8956 Killwagen (Schweiz),**
- Fig. 2: eine Ansicht einer erfindungsgemässen Antriebseinrichtung von der Vorderseite einer Arbeitsmaschine betrachtet,
- Fig. 3: eine Draufsicht der in Fig. 2 dargestellten Antriebseinrichtung,
- Fig. 4: eine Seitenansicht der in den Fig. 2 und 3 gezeigten Antriebseinrichtung,
- Fig. 5: einen Querschnitt durch die Antriebseinrichtung nach der Linie Z - Z in Fig. 3,
- Fig. 6: eine Ansicht einer alternativen Ausführungsform der erfindungsgemässen Antriebseinrichtung von der Vorderseite einer Arbeitsmaschine betrachtet,
- Fig. 7: eine Draufsicht der in Fig. 6 gezeigten Antriebseinrichtung,
- Fig. 8: einen Querschnitt durch die Antriebseinrichtung nach der Linie Y - Y in Fig. 7,
- Fig. 9: eine Ansicht einer weiteren alternativen Ausführungsform der erfindungsgemässen Antriebseinrichtung von der Vorderseite einer Arbeitsmaschine betrachtet,
- Fig. 10: eine Draufsicht der in Fig. 9 dargestellten Antriebseinrichtung,
- Fig. 11: einen Querschnitt durch die Antriebseinrichtung nach der Linie X - X in Fig. 10,
- Fig. 12: eine Ansicht einer weiteren alternativen Ausführungsform der erfindungsgemässen Antriebseinrichtung von der Vorderseite einer Arbeitsmaschine betrachtet,
- Fig. 13: eine Draufsicht der in Fig. 12 dargestellten Antriebseinrichtung,
- Fig. 14: einen Querschnitt durch die Antriebseinrichtung nach der Linie W - W in Fig. 13,
- Fig. 15: eine Ansicht einer weiteren alternativen Ausführungsform der erfindungsgemässen Antriebseinrichtung von der Vorderseite einer Arbeitsmaschine betrachtet,
- Fig. 16: eine Draufsicht der in Fig. 15 ersichtlichen Antriebseinrichtung,
- Fig. 17: einen Querschnitt durch die Antriebseinrichtung nach der Linie V - V in Fig. 16,
- Fig. 18: eine auszugsweise räumliche Darstellung der in den Fig. 2 bis 5 dargestellten Ausführungsform der erfindungsgemässen Antriebseinrichtung und
- Fig. 19: einen Längsschnitt nach der Linie U - U in Fig. 3 durch die Hydraulikpumpe einer Antriebseinheit der Antriebseinrichtung.

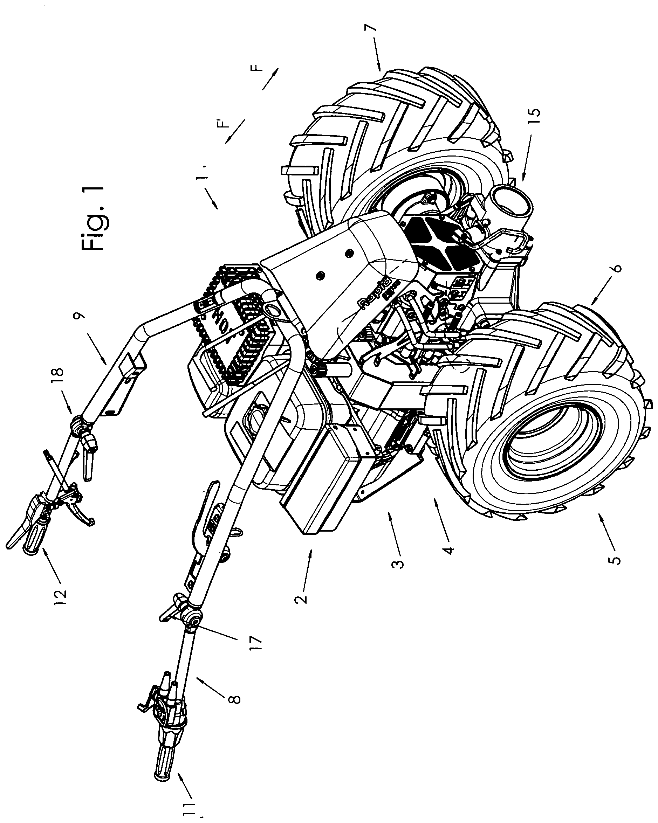

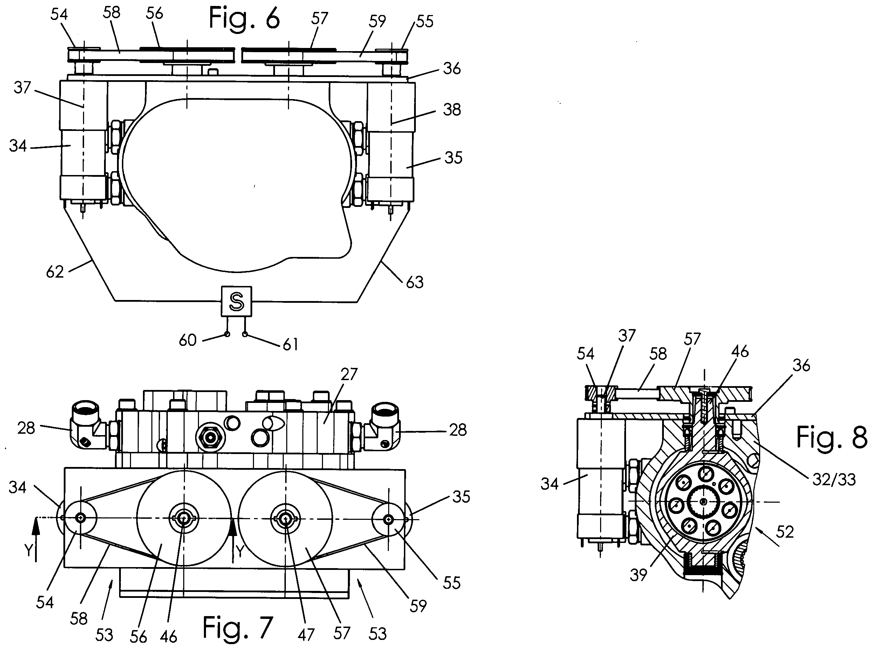

Fig. 1 zeigt eine zum Stand der Technik gehörende neuartige, selbstfahrende einachsige Arbeitsmaschine für das Betreiben und Fortbewegen von front- und/ oder heckseitig anbaubaren und zuschaltbaren Arbeitsgeräten (nicht sichtbar), die eine mit einem Antriebsmotor, vorzugsweise einem Verbrennungsmotor 2 antriebsverbundene Antriebseinrichtung 3 aufweist, mit der die an einer mit einem Fahrgestell 4 verbundenen Fahrachse 5 befestigten Antriebsräder 6, 7 hydraulisch und die anbaubaren Arbeitsgeräte wahlweise mechanisch oder hydraulisch/ hydrostatisch antreibbar sind. Die Arbeitsmaschine kann sowohl in Richtung F vorwärts als auch in der Gegenrichtung F' fortbewegt resp. verstellt werden. Selbstverständlich könnte der Antriebsmotor auch als Elektromotor ausgebildet sein.
Zur Führung resp. Bedienung durch eine begleitende Bedienungsperson oder einen Maschinisten sind Lenkholme 8, 9 einer sich beispielsweise etwa V-förmig erstreckenden Lenkanordnung vorgesehen, die mit dem Fahrgestell 4 der beim Ausführungsbeispiel mit einer hydrostatischen Antriebseinrichtung 3 versehenen Arbeitsmaschine verbunden sind.
Die auslegerartigen Lenkholme 8, 9 weisen an den abstehenden, freien, der Bedienungsperson zugewandten Enden jeweils einen Bedienungshandgriff 11, 12 zur manuellen Führung, Lenkung und Betätigung der Arbeitsmaschine resp. der Arbeitsgeräte auf. Das Lenken der Arbeitsmaschine erfolgt mittels einer (in Fig. 6 angedeuteten) Steuervorrichtung S durch die Bedienungsperson über die hydrostatische Antriebseinrichtung 3 auf die jeweils mit einem von einer Hydraulikpumpe versorgten Hydraulikmotor ausgestatteten Antriebsräder 6, 7 einer Fahrachse 5 der Arbeitsmaschine, an deren der Bedienungsperson abgewandten Vorderseite eine einschalt- und abschaltbare Zapfwelle 15 zur Koppelung der angebauten Arbeitsgeräte angeordnet ist. Der von der Bedienungsperson aus betrachtete eine (linke) Bedienungshandgriff 12 des Lenkholms 9 ist mit einem durch die linke Hand zu betätigenden Kupplungshebel und am anderen (rechten) Bedienungshandgriff 11 mit einem auf die Antriebsräder 6, 7 wirkenden Feststellhebel einer Feststellbremse (nicht ersichtlich) ausgerüstet, die hier nicht beschrieben, jedoch bekannt ist.
Die Fig. 1 zeigt weiterhin an den Lenkholmen 8, 9 eine Feststell- resp. Verstellvorrichtung 17, 18 zur ergonomischen Anpassung der Lenkholme 8, 9 an die Körpermasse der Bedienungsperson.

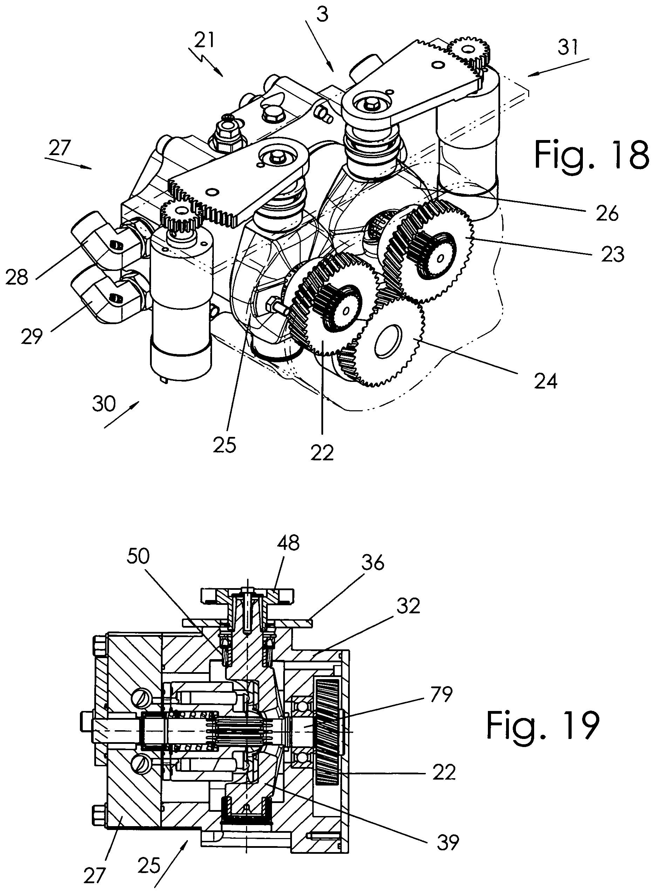

Fig. 18 stellt auszugsweise ein Antriebsaggregat 21 einer Arbeitsmaschine dar, das zwischen Antriebsmotor und Zapfwelle an einem Fahrgestell (nicht ersichtlich) der Arbeitsmaschine befestigt ist. Das Antriebsaggregat 21 besteht an dem der Zapfwelle zugewandten vorderen Ende aus Zahnrädern 22, 23, die von einem an einer Hauptantriebswelle (nicht erkennbar) befestigten Antriebszahnrad 24 angetrieben sind. An der mit dem Antriebsmotor 2 verbundenen Hauptantriebswelle ist auch ein Zahnrad zum Antrieb der Zapfwelle befestigt, wobei die Hauptantriebswelle mit der Antriebsmotorwelle durch eine manuell zuschaltbare Kupplung verbunden ist.
Die Zahnräder 22, 23 treiben jeweils eine den Antriebsrädern 6, 7 der Fahrachse 5 der Arbeitsmaschine zugeordnete Hydraulikpumpe 25, 26 an, die einer hydrostatischen Antriebseinrichtung 3 zugeordnet sind.
An die rückwärtige Seite der Hydraulikpumpen 25, 26 anschliessend ist mit diesen ein Verteilblock 27 für die den Hydromotoren zu- und rückzuführende Hydraulikflüssigkeit fest verbunden.
Weiterhin erkennbar sind in Fig. 18 zwei einer Hydraulikpumpe zugeordnete winkelförmige Verschraubungen 28, 29 von einen Hydraulikmotor eines Antriebsrades 6, 7 mit einer Hydraulikpumpe verbindenden Hydraulikleitungen (nicht ersichtlich). Wichtiger Bestandteil des Antriebsaggregates 21 ist die erfindungsgemässe hydrostatische Antriebseinrichtung 3, die aus einer mit jeweils einem Hydraulikmotor 13, 14 eines Antriebsrades 6, 7 der Fahrachse 5 antriebswirksam verbundenen, und einer zugeschalteten elektromechanisch einstell- und verstellbaren Hydraulikpumpe 25, 26 aufweisenden Antriebseinheit 30, 31 besteht.

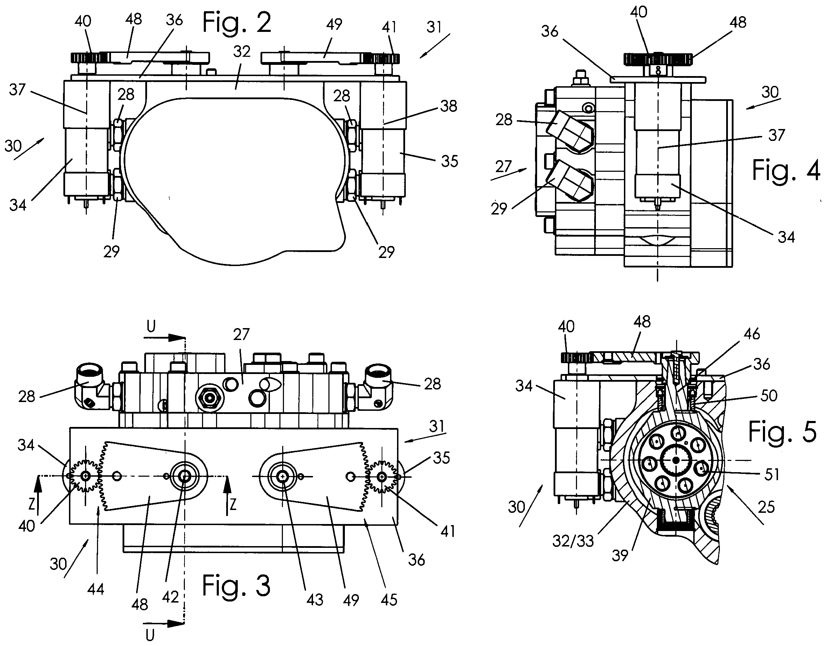

Die in Fig. 18 dargestellte Antriebseinrichtung 3 ist weiterhin in den Fig. 2 bis 5 detailliert veranschaulicht. Diese Figuren zeigen auszugsweise eine Antriebseinrichtung 3, gebildet aus zwei Antriebseinheiten 30, 31, die jeweils einem Antriebsrad 6, 7 einer Fahrachse 5 zur Lenkung einer Arbeitsmaschine zugeordnet sind. Jede Antriebseinheit 30, 31 besteht vorzugsweise aus einer gleichartigen Hydraulikpumpe 25, 26, die in einem Pumpengehäuse 32, 33 angeordnet und beispielsweise als verstellbare Axialkolbenpumpe ausgebildet sind. Wesentlich ist an der Hydraulikpumpe 25, 26, dass sie zur Einstellung resp. Verstellung der Fördermenge einer zu fördernden hydraulischen Flüssigkeit ausgebildet ist, um so den den Antriebsrädern 6, 7 zugeordneten Hydraulikmotoren 13, 14 unterschiedliche oder gleiche Flüssigkeitsmengen zuführen zu können. Die Ausbildung und Funktionsweise geeigneter, verstellbarer Hydraulikpumpen kann der einschlägigen Fachliteratur zur Hydraulik oder dem "Taschenbuch für den Maschinenbau -Dubbel-" entnommen werden und ist nicht Gegenstand der vorliegenden Patentanmeldung.
Die erfindungsgemässen Ausführungen resp. Antriebseinrichtungen 3 sind jeweils als kompakte Einheit konstruiert, die relativ wenig Raum und Gewicht in Anspruch nimmt und dennoch für den Unterhalt gut zugänglich ist. Die Hydraulikpumpen 25, 26 einer Antriebseinrichtung 3 können jeweils blockweise auf dem Fahrgestell 5 der Arbeitsmaschine aufgebaut sein.
Die Ausführung gemäss den Fig. 2 bis 5 weist zwei Antriebseinheiten 30, 31 auf, denen jeweils eine ein- und verstellbare Hydraulikpumpe 25, 26 zugeordnet ist, die zur Ein- und Verstellung der Fördermenge der hydraulischen Flüssigkeit durch eine von Hand betätigbare oder halbautomatische Steuerung elektromechanisch bedienbar ist. Zu diesem Zweck weist jede Antriebseinheit 30, 31 vorzugsweise einen drehwinkelgesteuerten Elektromotor 34, 35 resp. Verstellmotor auf, der an eine mit einer Stromquelle, beispielsweise Batterie oder Alternator resp. Lichtmaschine (nicht erkennbar) verbundene, manuell oder halbautomatisch betätigbare Steuerung S angeschlossen ist (siehe auch Fig. 6). Die Elektromotoren 34, 35 sind rechtwinklig zu einer Längsachse der Arbeitsmaschine sich gegenüberliegend an der Unterseite einer an der Oberseite der Hydraulikpumpen 25, 26 aufliegend befestigten Tragplatte 36 oder dgl. und mit senkrecht ausgerichteter Antriebswelle 37, 38 festgeschraubt. Zur Betätigung eines Verstellorgans 39 der Hydraulikpumpe 25, 26 ist ein Zahnritzel 40, 41 an der Antriebswelle 37, 38 eines Elektromotors 34, 35 befestigt, das zur Bildung einer Einstell- und Verstellvorrichtung 44, 45 mit einem an einer Verstellwelle 46, 47 des Verstellorgans 39 der Hydraulikpumpe 25, 26 befestigten Zahnradsegment 48, 49 kämmt.
Die Fig. 5 zeigt eine zwischen Pumpengehäusebohrung 50 und Verstellwelle 46 angeordnete Dichtung sowie die gegenüberliegende Lagerung des Verstellorgans 39 der Hydraulikpumpe 25, 26 im Pumpengehäuse 32. Bezugszeichen 51 weist auf die Kolben einer verstellbaren Axialkolbenpumpe 25 hin.

Eine alternative Ausführungsform der erfindungsgemässen Arbeitsmaschine zeigen die Fig. 6 bis 8. Anstelle eines Zahnradgetriebes der Fig. 2 bis 5 ist ein Zugmittelgetriebe 52, 53 mit einem an der Antriebswelle 37, 38 eines Verstellmotors 34, 35 befestigten Antriebsrad 54, 55 vorgesehen, an dem und einem an der Verstellwelle 46, 47 eines Verstellorgans 39 der Hydraulikpumpe 25, 26 befestigten Umlenkrad 56, 57 ein Zugmittel 58, 59 umgelenkt resp. hin und her bewegt wird. Als Zugmittel stehen beispielsweise schlupffreie Zahnriemen, Antriebsketten oder Keilriemen zur Verfügung.

Fig. 6 vermittelt schematisch eine mit S bezeichnete Steuerung oder Steuervorrichtung, die symbolisch dargestellte Bedienhebel 60, 61 zur manuellen oder halbautomatischen Betätigung der Elektromotoren 34, 35 über die elektrischen Leitungen 62, 63 aufweist. Eine halbautomatische Betätigung der Antriebseinrichtung 3 ist für eine gegenseitig abhängige Funktionsweise der Antriebseinheiten 30, 31 vorgesehen, indem zur Lenkung der Arbeitsmaschine dem einen Hydraulikmotor 13, 14 eines Antriebsrades 6, 7 einer Fahrachse 5 jeweils mehr als dem anderen reziprok umgekehrt weniger hydraulische Flüssigkeit zugeführt wird bei einer konstanten Flüssigkeitsmenge. Dies gilt übrigens für alle halbautomatisch betätigten Ausführungen der erfindungsgemässen Arbeitsmaschine. D.h., es findet zwischen den Antriebeinheiten 30, 31 eine automatische Regelung der den Antriebsrädern 6, 7 resp. Hydraulikmotoren jeweils zugeführten Flüssigkeitsmengen statt.

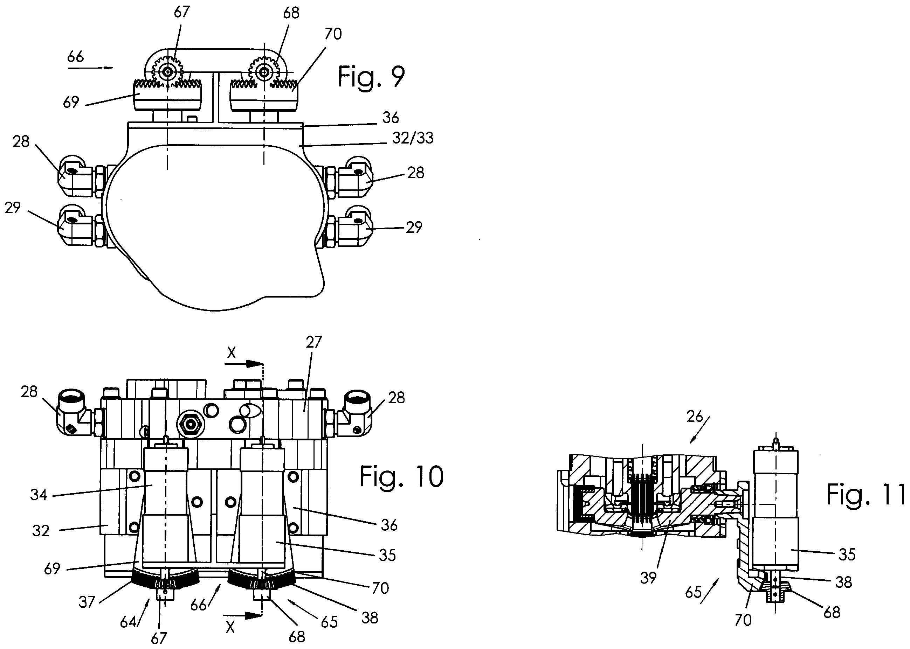

Eine weitere alternative Ausführung nach der erfindungsgemässen Arbeitsmaschine ist in den Fig. 9 bis 11 veranschaulicht. Hierbei sind die Verstellvorrichtungen 44, 45 mit jeweils einem Winkelgetriebe 64, 65 ausgestattet. Im Sinne einer kompakten Bauweise, auf hoher Genauigkeit beruhend, ist die auf den Hydraulikpumpen 25, 26 befestigte Tragplatte 36 als Gestell 66 weiterausgebildet, an dem die Elektromotoren 34, 35 parallel nebeneinanderliegend und mit um horizontale Achsen drehenden Antriebswellen 37, 38 stirnseitig verschraubt sind. Die Winkelgetriebe 64, 65 bestehen aus jeweils einem an der Antriebswelle 37, 38 der Elektromotoren 34, 35 befestigten Kegelrad 67, 68 und einem kämmenden Kegelradsegment 69, 70, das einen erheblich grösseren Teilkreisdurchmesser als das Kegelrad 67, 68 aufweist, um so, antriebsverbunden mit dem Verstellorgan 39 der Hydraulikpumpe 25, 26 feine Verstellbewegungen ausführen zu können.

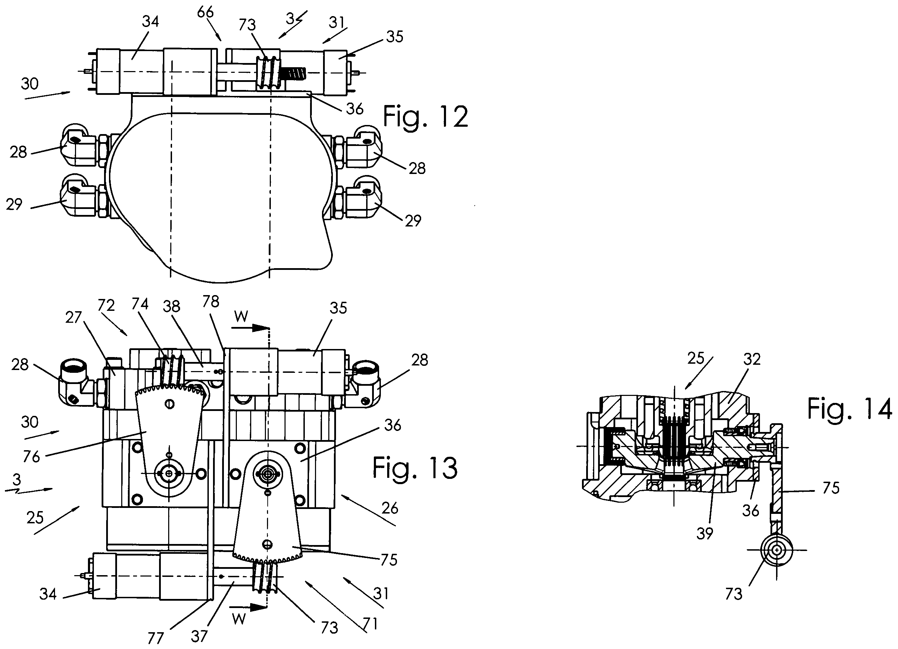

In den Fig. 12 bis 14 ist eine weitere Ausführungsform einer Antriebseinrichtung 3 dargestellt, die Antriebseinheiten 30, 31 mit einem Schneckengetriebe 71, 72 aufweist, wobei eine Schnecke 73, 74 jeweils an der Antriebswelle 37, 38 eines Elektromotors 34, 35 und das der Schnecke 74, 75 gegenüberstehende , kämmende Zahnradsegment 75, 76 mit dem (schwenkbaren) Verstellorgan 39 der Hydraulikpumpe 25, 26 antriebsverbunden ist. Die Elektromotoren 34, 35 sind an der auf den Pumpengehäusen 32, 33 aufliegend verschraubten Tragplatte 36, die als Gestell 66 weiterausgebildet ist, befestigt. Die Elektromotoren 34, 35 sind an von der Tragplatte 36 hochstehenden Stegen 77, 78 des gemeinsamen Gestells 66 an der der Antriebswelle 37, 38 zugewandten Stirnseite festgeschraubt und erstrecken sich jeweils in entgegegengesetzter Richtung, horizontal und senkrecht zur Fortbewegungsrichtung der Arbeitsmaschine, so dass die Zahnkränze der nebeneinander beabstandeten Zahnradsegmente 75, 76 abgewandt gegenüberliegend angeordnet sind.

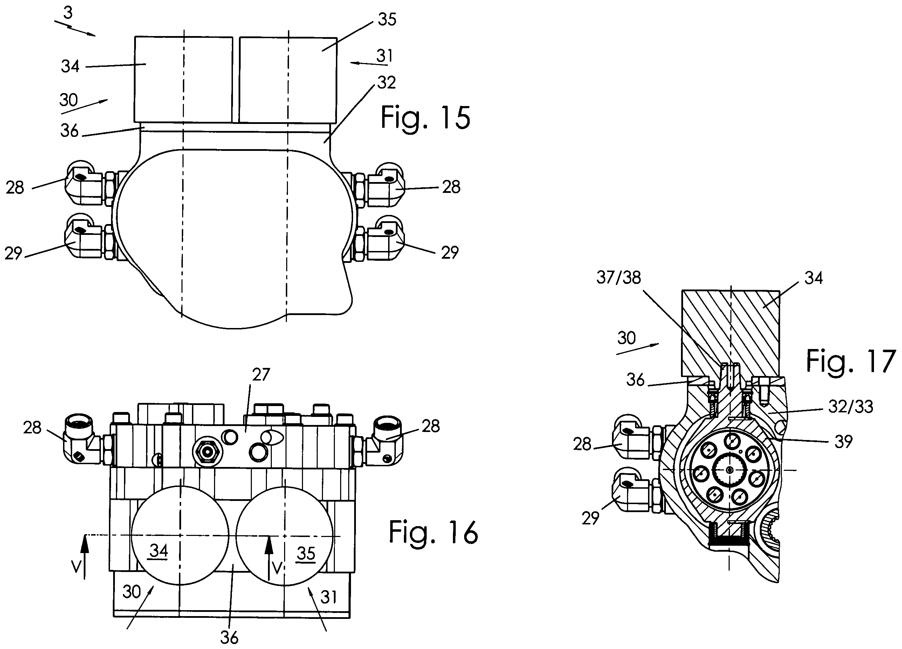

In den Fig. 15 bis 17 fällt die Antriebseinrichtung 3 durch vereinfachte Antriebseinheiten 30, 31 auf, bei denen der Elektromotor 34, 35 jeweils an der mit den Oberseiten der Pumpengehäuse 32, 33 befestigten Tragplatte 36 verschraubt und das Verstellorgan 39 der Hydraulikpumpe 25, 26 mit der Antriebswelle 37, 38 des Elektromotors 34, 35 resp. Verstellmotors direkt gekuppelt ist.

Fig. 19 zeigt eine weitgehend plane Längsschnitt-Darstellung einer Antriebseinheit 30 durch eine Hydraulikpumpe 25 in Fig. 3. Die mittels Zahnrad 22 (siehe auch Fig. 18) angetriebene Pumpenwelle 79 der Hydraulikpumpe 25 ist in den ein (flüssigkeit-) dichtes Gehäuse bildenden Pumpengehäuse 32, 33 und dem Verteilblock 27 für die hydraulische Flüssigkeit gelagert.

## Patentansprüche

1. Selbstfahrende, wenigstens einachsige Arbeitsmaschine (1) zum Betreiben und/oder Fortbewegen von angebauten Arbeitsgeräten resp. angehängten Fahrzeugen, welche Arbeitsmaschine (1) eine von einem Antriebsmotor (2) vorzugsweise von einem Verbrennungsmotor (2) angetriebene hydrostatische Antriebseinrichtung (3) zur lenkbaren Fortbewegung durch mit den Antriebsrädern (6, 7) einer Fahrachse (5) der Arbeitsmaschine verbundene Hydraulikmotoren (13, 14) eines Antriebsaggregates (21) aufweist, und vorzugsweise in eine Vorwärts- oder eine Rückwärtsfortbewegung verstellbar ist, wobei das Antriebsaggregat (21) die hydrostatische Antriebseinrichtung (3) der Antriebsräder (6, 7) und eine Antriebsvorrichtung für eine Zapfwelle (15) aufweist und wobei die hydrostatische Antriebseinrichtung (3) zwischen dem Antriebsmotor (2) und der Antriebsvorrichtung für die Zapfwelle (15) angeordnet ist, wobei die hydrostatische Antriebseinrichtung (3) für jedes Antriebsrad (6, 7) einer Fahrachse (5) eine mit dem jeweiligen Antriebsrad (6, 7) antriebswirksam verbundene Antriebseinheit (30, 31) aufweist, die aus jeweils einem Hydraulikmotor (13, 14) und jeweils einer zugeschalteten elektromechanisch einstell- und verstellbaren Hydraulikpumpe (25, 26) gebildet ist, und wobei das Antriebsaggregat (21) eine Hauptantriebswelle aufweist, die mit dem Antriebsmotor (2) zuschaltbar verbunden und an der ein Zahnrad zum Antrieb der Zapfwelle (15) befestigt ist und wobei das Antriebsaggregat (21) an dem der Zapfwelle (15) zugewandten Ende Hydraulikpumpenzahnräder (22, 23) aufweist, die von einem an der Hauptantriebswelle befestigten Antriebszahnrad (24) angetrieben sind, wobei die Hydraulikpumpenzahnräder (22, 23) jeweils eine den Antriebsrädern (6, 7) der Fahrachse (5) der Arbeitsmaschine zugeordnete Hydraulikpumpen (25, 26) antreiben, die einer hydrostatischen Antriebseinrichtung (3) zugeordnet sind.

2. Arbeitsmaschine nach Anspruch 1, **dadurch gekennzeichnet, dass** die Antriebseinheiten (30, 31) der Antriebseinrichtung (3) abhängig oder unabhängig voneinander steuerbar sind.

3. Arbeitsmaschine nach Anspruch 1 oder 2, **dadurch gekennzeichnet, dass** die Hydraulikpumpe (25, 26) einer Antriebseinheit (30, 31) durch einen steuerbaren Motor (34, 35), vorzugsweise Elektromotor resp. Verstellmotor ein- und verstellbar ist.

4. Arbeitsmaschine nach einem der Ansprüche 1 bis 3, mit einem die Fahrachse (5) aufweisenden Fahrgestell (4), mit dem die hydrostatische Antriebseinrichtung (3) durch eine Befestigungsvorrichtung verbunden ist, an der zumindest die mit den Hydromotoren (13, 14) antriebswirksam verbundenen Hydraulikpumpen (25, 26) der hydrostatischen Antriebseinrichtung (3) befestigt sind.

5. Arbeitsmaschine nach Anspruch 3, **dadurch gekennzeichnet, dass** der vorzugsweise als Stell- resp. Verstellmotor ausgebildete steuerbare Elektromotor (34, 35) mit einer Stromquelle verbunden ist.

6. Arbeitsmaschine nach Anspruch 5, **dadurch gekennzeichnet, dass** ein Verstellorgan (39) der Hydraulikpumpe (25, 26) mittel- oder unmittelbar mit dem Elektromotor (34, 35) antriebsverbunden ist.

7. Arbeitsmaschine nach Anspruch 6, **dadurch gekennzeichnet, dass** eine mit dem Verstellorgan (39) der Hydraulikpumpe (25, 26) verbundene Einstell- und Verstellvorrichtung (44, 45) mit dem Elektromotor (34, 35) antriebsverbunden ist.

8. Arbeitsmaschine nach Anspruch 7, **dadurch gekennzeichnet, dass** die Einstell- und Verstellvorrichtung (44, 45) als Getriebe mit unveränderbarer Untersetzung ausgebildet ist.

9. Arbeitsmaschine nach Anspruch 8, **dadurch gekennzeichnet, dass** das Getriebe form-, reib- oder kraftschlüssig wirksam ausgebildet ist.

10. Arbeitsmaschine nach Anspruch 8 oder 9, **dadurch gekennzeichnet, dass** das Getriebe als Zahnrad- oder Zugmittelgetriebe (52, 53) ausgebildet ist.

11. Arbeitsmaschine nach Anspruch 10, **dadurch gekennzeichnet, dass** das Getriebe als Stirnradgetriebe ausgebildet ist, das ein an dem Verstellorgan (39) einer Hydraulikpumpe (25, 26) befestigtes Zahnradsegment (48, 49) aufweist, das in ein an der Welle des Elektromotors (34, 35) befestigtes, vorzugsweise einen mehrfach kleineren Teildurchmesser aufweisendes Zahnrad (40, 41) eingreift.

12. Arbeitsmaschine nach Anspruch 10, **dadurch gekennzeichnet, dass** das Getriebe als Zugmittelgetriebe (52, 53) ausgebildet ist, das ein an dem Verstellorgan (39) einer Hydraulikpumpe (25, 26) befestigtes Umlenkrad (56, 57) aufweist, das durch ein angelegtes Zugmittel (58, 59) mit einem an der Welle (37, 38) des Elektromotors (34, 35) befestigten, vorzugsweise einen mehrfach kleineren Durchmesser aufweisenden Antriebsrad (37, 38) antriebsverbunden ist.

13. Arbeitsmaschine nach Anspruch 10, **dadurch gekennzeichnet, dass** das Getriebe als Winkelgetriebe (64, 65) ausgebildet ist, das ein an dem Verstellorgan (39) einer Hydraulikpumpe (25, 26) befestigtes Kegelradsegment (69, 70) aufweist, das in ein an der Welle (37, 38) des Elektromotors (34, 35) befestigtes, vorzugsweise einen mehrfach kleineren Teilkreisdurchmesser aufweisendes Kegelrad (67, 68) eingreift.

14. Arbeitsmaschine nach Anspruch 10, **dadurch gekennzeichnet, dass** das Getriebe als Schneckengetriebe (71, 72) ausgebildet ist, das ein an dem Verstellorgan (39) einer Hydraulikpumpe (25, 26) befestigtes Zahnradsegment (75, 76) aufweist, das mit einer an der Antriebswelle (37, 38) eines Elektromotors (34, 35) befestigten Schnecke (73, 74) kämmt.

15. Arbeitsmaschine nach einem der Ansprüche 1 bis 6, **dadurch gekennzeichnet, dass** die Antriebswelle (37, 38) eines Elektromotors (34, 35) einer Antriebseinheit (30, 31) mit dem Verstellorgan (39) einer Hydraulikpumpe (25, 26) unmittelbar gekuppelt ist.

## Claims

1. Self-propelled, at least single-axle working machine (1) for driving and/or moving mounted implements or attached vehicles, said working machine (1) comprising a hydrostatic drive device (3) driven by a drive motor (2), preferably by an internal combustion engine (2), for steerable movement by hydraulic motors (13, 14) of a drive assembly (21) connected to the drive wheels (6, 7) of an axle (5) of the working machine, and preferably being adjustable between a forward or a backward movement, wherein the drive assembly (21) comprises the hydrostatic drive device (3) of the drive wheels (6, 7) and a driving device for a power take-off shaft (15), wherein the hydrostatic drive device (3) is arranged between the drive motor (2) and the driving device for the power take-off shaft (15), wherein the hydrostatic drive device (3) comprises for each drive wheel (6, 7) of an axle (5) respective drive units (30, 31) operatively connected to the respective drive wheel (6, 7) and each formed of a hydraulic motor (13, 14) and a switched-in hydraulic pump (25, 26) that can be set and adjusted electromechanically, wherein the drive assembly (21) comprises a main drive shaft switchably connected to the drive motor (2) and to which a gear for driving the power take-off shaft (15) is secured, wherein the drive assembly (21) comprises at the end directed towards the power take-off shaft (15) hydraulic pump gears (22, 23) driven by a drive gear (24) secured to the main drive shaft and wherein the hydraulic pump gears (22, 23) each drive respective hydraulic pumps (25, 26) associated with the drive wheels (6, 7) of the axle (5) of the working machine, associated with a hydrostatic drive device (3).

2. Working machine according to claim 1, **characterised in that** the drive units (30, 31) of the drive device (3) can be controlled dependently or independently of one another.

3. Working machine according to claim 1 or claim 2, **characterised in that** the hydraulic pump (25, 26) of a drive unit (30, 31) can be set and adjusted by a controllable motor (34, 35), preferably an electric motor or an actuator.

4. Working machine according to one of claims 1 to 3, comprising a chassis (4) comprising the axle (5) and to which the hydrostatic drive device (3) is connected by means of a securing device to which at least the hydraulic pumps (25, 26) of the hydrostatic drive device (3) operatively connected to the hydraulic motors (13, 14) are secured.

5. Working machine according to claim 3, **characterised in that** the controllable electric motor (34, 35) preferably designed as a servo motor or actuator is connected to a power source.

6. Working machine according to claim 5, **characterised in that** an adjusting element (39) of the hydraulic pump (25, 26) is indirectly or directly operatively connected to the electric motor (34, 35).

7. Working machine according to claim 6, **characterised in that** a setting and adjusting device (44, 45) connected to the adjusting element (39) of the hydraulic pump (25, 26) is operatively connected to the electric motor (34, 35).

8. Working machine according to claim 7, **characterised in that** the setting and adjusting device (44, 45) is designed as a gear unit with a fixed reduction ratio.

9. Working machine according to claim 8, **characterised in that** the gear unit is designed to operate positively, frictionally or non-positively.

10. Working machine according to claim 8 or claim 9, **characterised in that** the gear unit is designed as toothed gearing or belt and chain gearing (52, 53).

11. Working machine according to claim 10, **characterised in that** the gear unit is designed as spur gearing comprising a gear segment (48, 49) secured to the adjusting element (39) of a hydraulic pump (25, 26) and engaging with a gear (40, 41) that is secured to the shaft of the electric motor (34, 35) and preferably has a pitch diameter that is several times smaller.

12. Working machine according to claim 10, **characterised in that** the gear unit is designed as belt and chain gearing (52, 53) comprising a guide wheel (56, 57) secured to the adjusting element (39) of a hydraulic pump (25, 25) and operatively connected by means of an applied traction means (58, 59) to a drive wheel (54, 55) that is secured to the shaft (37, 38) of the electric motor (34, 35) and preferably has a diameter that is several times smaller.

13. Working machine according to claim 10, **characterised in that** the gear unit is designed as bevel gearing (64, 65) comprising a bevel gear segment (69, 70) secured to the adjusting element (39) of a hydraulic pump (25, 26) and meshing with a bevel gear (67, 68) that is secured to the shaft (37, 38) of the electric motor (34, 35) and preferably has a pitch diameter that is several times smaller.

14. Working machine according to claim 10, **characterised in that** the gear unit is designed as worm gearing (71, 72) comprising a gear segment (75, 76) secured to the adjusting element (39) of a hydraulic pump (25, 26) and meshing with a worm (73, 74) secured to the drive shaft (37, 38) of an electric motor (34, 35).

15. Working machine according to one of claims 1 to 6, **characterised in that** the drive shaft (37, 38) of an electric motor (34, 35) of a drive unit (30, 31) is directly coupled to the adjusting element (39) of a hydraulic pump (25, 26).

## Revendications

1. Engin de travail automoteur (1), à au moins un essieu, pour le fonctionnement et/ou le déplacement d'appareils de travail montés, respectivement de véhicules attelés, l'engin de travail (1) présentant un dispositif d'entraînement hydrostatique (3) entraîné par un moteur d'entraînement (2), de préférence par un moteur à combustion interne (2), pour le déplacement dirigeable par des moteurs hydrauliques (13, 14) d'un groupe motopropulseur (21) connectés aux roues motrices (6, 7) d'un essieu moteur (5) de l'engin de travail, et de préférence pouvant être réglé dans un déplacement vers l'avant ou vers l'arrière, le groupe motopropulseur (21) présentant le dispositif d'entraînement hydrostatique (3) des roues motrices (6, 7) et un dispositif d'entraînement pour un arbre de prise de force (15), et le dispositif d'entraînement hydrostatique (3) étant disposé entre le moteur d'entraînement (2) et le dispositif d'entraînement pour l'arbre de prise de force (15), le dispositif d'entraînement hydrostatique (3) présentant, pour chaque roue motrice (6, 7) d'un essieu moteur (5), une unité d'entraînement (30, 31) reliée par entraînement à la roue motrice respective (6, 7), qui est formée à chaque fois d'un moteur hydraulique (13, 14) et à chaque fois d'une pompe hydraulique (25, 26) commutée ajustable et réglable de manière électromécanique, et le groupe motopropulseur (21) présentant un arbre d'entraînement principal qui est connecté de manière commutable au moteur d'entraînement (2) et au niveau duquel une roue dentée est fixée pour l'entraînement de l'arbre de prise de force (15), et le groupe motopropulseur (21) présentant, au niveau de l'extrémité tournée vers l'arbre de prise de force (15), des roues dentées de pompe hydraulique (22, 23) qui sont entraînées par une roue dentée d'entraînement (24) fixée à l'arbre d'entraînement principal, les roues dentées de pompe hydraulique (22, 23) entraînant à chaque fois une pompe hydraulique (25, 26) associée aux roues motrices (6, 7) de l'essieu moteur (5) de l'engin de travail, lesquelles pompes hydrauliques sont associées à un dispositif d'entraînement hydrostatique (3).

2. Engin de travail selon la revendication 1, **caractérisé en ce que** les unités d'entraînement (30, 31) du dispositif d'entraînement (3) peuvent être commandées les unes en fonction des autres ou indépendamment les unes des autres.

3. Engin de travail selon la revendication 1 ou 2, **caractérisé en ce que** la pompe hydraulique (25, 26) d'une unité d'entraînement (30, 31) peut être ajustée et réglée par un moteur commandable (34, 35), de préférence un moteur électrique ou un moteur de réglage.

4. Engin de travail selon l'une quelconque des revendications 1 à 3, comprenant un châssis (4) présentant l'essieu moteur (5), auquel le dispositif d'entraînement hydrostatique (3) est connecté par un dispositif de fixation, au niveau duquel sont fixées au moins les pompes hydrauliques (25, 26) du dispositif d'entraînement hydrostatique (3) connectées par entraînement aux moteurs hydrauliques (13, 14).

5. Engin de travail selon la revendication 3, **caractérisé en ce que** le moteur électrique commandable (34, 35) réalisé de préférence sous forme de moteur de commande ou de moteur de réglage, est connecté à une source d'alimentation électrique.

6. Engin de travail selon la revendication 5, **caractérisé en ce qu'**un organe de réglage (39) de la pompe hydraulique (25, 26) est connecté par entraînement de manière directe ou indirecte au moteur électrique (34, 35).

7. Engin de travail selon la revendication 6, **caractérisé en ce qu'**un dispositif d'ajustement et de réglage (44, 45) connecté à l'organe de réglage (39) de la pompe hydraulique (25, 26) est connecté par entraînement au moteur électrique (34, 35).

8. Engin de travail selon la revendication 7, **caractérisé en ce que** le dispositif d'ajustement et de réglage (44, 45) est réalisé sous forme de transmission à démultiplication invariable.

9. Engin de travail selon la revendication 8, **caractérisé en ce que** la transmission est réalisée de manière à agir par engagement par correspondance de formes, par engagement par friction ou par engagement par force.

10. Engin de travail selon la revendication 8 ou 9, **caractérisé en ce que** la transmission est réalisée sous forme de transmission à engrenages ou à moyen de traction (52, 53).

11. Engin de travail selon la revendication 10, **caractérisé en ce que** la transmission est réalisée sous forme de transmission à pignons droits qui présente un segment de roue dentée (48, 49) fixé à l'organe de réglage (39) d'une pompe hydraulique (25, 26), qui s'engage dans une roue dentée (40, 41) fixée à l'arbre du moteur électrique (34, 35), présentant de préférence un diamètre partiel beaucoup plus petit.

12. Engin de travail selon la revendication 10, **caractérisé en ce que** la transmission est réalisée sous forme de transmission à moyen de traction (52, 53) qui présente une poulie de renvoi (56, 57) fixée à l'organe de réglage (39) d'une pompe hydraulique (25, 26), laquelle poulie de renvoie est connectée par entraînement par un moyen de traction appliqué (58, 59) à une roue d'entraînement (54, 55) fixée à l'arbre (37, 38) du moteur électrique (34, 35), de préférence présentant un diamètre beaucoup plus petit.

13. Engin de travail selon la revendication 10, **caractérisé en ce que** la transmission est réalisée sous forme de renvoi d'angle (64, 65) qui présente un segment de roue conique (69, 70) fixé à l'organe de réglage (39) d'une pompe hydraulique (25, 26), qui s'engage dans une roue conique (67, 68) fixée au niveau de l'arbre (37, 38) du moteur électrique (34, 35), de préférence présentant un diamètre de cercle partiel beaucoup plus petit.

14. Engin de travail selon la revendication 10, **caractérisé en ce que** la transmission est réalisée sous forme de transmission à vis sans fin (71, 72) qui présente un segment de roue dentée (75, 76) fixé à l'organe de réglage (39) d'une pompe hydraulique (25, 26), qui s'engrène avec une vis sans fin (73, 74) fixée à l'arbre d'entraînement (37, 38) d'un moteur électrique (34, 35).

15. Engin de travail selon l'une quelconque des revendications 1 à 6, **caractérisé en ce que** l'arbre d'entraînement (37, 38) d'un moteur électrique (34, 35) d'une unité d'entraînement (30, 31) est accouplé directement à l'organe de réglage (39) d'une pompe hydraulique (25, 26).
